# NOUVEAU FASCICULE DE BREVET EUROPEEN

(11) **EP 3 774 278 B2**
(45) Date de publication et mention de la décision concernant l'opposition: **29.10.2025**
(45) Mention de la délivrance du brevet: 23.03.2022
(21) Numéro de dépôt: 19722662.4
(22) Date de dépôt: 04.04.2019
(51) Int. Cl.: B29C 49/78, B29C 49/06, B29C 49/36, B29C 49/42, B29C 49/64, B29L 31/00

(54) **PROCEDE ET DISPOSITIF DE GESTION D'UNITE DE TRAITEMENT ROTATIVE**
VERFAHREN UND VORRICHTUNG ZUR VERWALTUNG EINER ROTIERENDEN VERARBEITUNGSEINHEIT
METHOD AND DEVICE FOR MANAGING A ROTARY PROCESSING UNIT

(30) Priorité: 06.04.2018 FR 1853018
(43) Date de publication de la demande: 17.02.2021
(73) Titulaire: Sidel Participations, 76930 Octeville-sur-Mer (FR)
(72) Inventeur: BOURVELLEC, Loïc, 76930 Octeville-sur-mer (FR); PASQUIER, Hervé, 76930 Octeville-sur-mer (FR)
(74) Mandataire: Sidel Group
(86) Numéro de dépôt international: PCT/FR2019/050788
(87) Numéro de publication internationale: WO 2019/193289

(56) Documents cités:
- EP-A1- 2 878 425
- EP-A1- 3 272 491
- CN-A- 107 150 839
- DE-A1- 10 340 916
- DE-A1- 102007 005 489
- DE-A1- 19 521 924
- DE-B3- 102014 011 370
- DE-T2- 69 304 419
- US-A1- 2013 061 557
- US-A1- 2013 231 772

## Description

La présente invention entre dans le domaine de la gestion d'unité de traitement, de type rotative, au sein d'une ligne de production d'articles.

L'invention trouvera une application préférentielle, mais aucunement limitative, au sein d'une ligne de production de récipients obtenus par soufflage, puis étiquetés et remplis, notamment au cours d'une opération d'étiquetage et de remplissage.

De manière connue, la fabrication de récipients en matériau plastique, tels des flacons ou bouteilles, peut s'effectuer au cours d'une opération de mise en forme par soufflage ou étirage-soufflage d'un corps creux en matériau plastique, appelées « préformes ». Les préformes présentent généralement un corps sensiblement cylindrique de révolution à paroi tubulaire épaisse, ledit corps étant fermé à l'une de ses extrémités axiales par un fond à paroi épaisse. Ce corps est prolongé à son autre extrémité par un col, lui aussi tubulaire. Le col est conformé à sa forme et à ses dimensions définitives tandis que le corps de la préforme, préalablement chauffé, est destiné à subir une déformation pour le conformer en récipient lors d'une étape de formage. Des procédés et des dispositifs de ce type sont décrits par exemple dans les documents brevets DE10340916A1 et US2013/061557A1.

Au sein d'une telle ligne de production, un flux de corps creux alimente une machine de soufflage, produisant les récipients vides. Une telle machine comporte plusieurs unités de traitement, une unité de conditionnement thermique appelée « four », suivie d'une unité de soufflage. Les récipients alimentent alors une unité de traitement suivante, comme une unité d'étiquetage puis une unité de remplissage.

Dans le cadre de la présente invention, chaque unité de traitement comprend au moins un élément rotatif, sous forme d'un carrousel ou d'une roue de transfert, supportant des organes répartis régulièrement en périphérie. Lesdits organes sont dédiés au traitement à réaliser, comme par exemple des moules et des vannes de soufflage constituant un poste de soufflage pour l'unité de soufflage, des vannes de remplissage des récipients pour l'unité de remplissage, des encoches supportant les préformes sous collerette ou des pinces enserrant les préformes au-dessus de leur collerette aux niveaux des roues de transfert, etc.

Au cours de la rotation de l'élément, un premier organe se présente en vis-à-vis d'une entrée alimentée par ledit flux de corps creux, ledit premier organe reçoit un corps creux et effectue une opération dédiée, alors qu'il est déplacé angulairement, entraînant ledit corps creux. L'organe suivant, selon le sens de rotation dudit élément mobile, se retrouve aligné avec ladite entrée et reçoit le corps creux suivant en vue de son traitement. Le corps creux traité à partir du premier organe est extrait lorsqu'au cours de la rotation de l'élément mobile, ledit premier organe se retrouve aligné avec une sortie, et ainsi de suite pour les organes suivants, jusqu'à ce que ledit premier organe, libre de corps creux, se retrouve en vis-à-vis de ladite entrée et que le cycle se répète.

A titre d'exemple d'un traitement appliqué à des corps creux, dans le cadre du soufflage de préformes pour créer des récipients, en sortie de four, les corps creux chauds alimentent successivement l'unité de traitement par soufflage, notamment via une roue de transfert. L'unité de soufflage comprend un élément rotatif sous forme d'un carrousel supportant en périphérie au moins un poste de soufflage comprenant un moule et au moins une vanne de soufflage, constituant un organe. En tournant avec l'entraînement en rotation dudit carrousel, chaque moule qui passe devant l'entrée reçoit successivement une préforme chauffée, effectue le traitement de soufflage au cours de son déplacement, pour extraire un récipient quand il se retrouve aligné avec la sortie.

Une fois les récipients formés, ils sont transportés vers d'autres unités de traitements situées en aval, comme un poste d'étiquetage puis un poste de remplissage (ou inversement un poste de remplissage puis un poste d'étiquetage), généralement eux aussi pourvus d'un autre élément rotatif à même de recevoir, traiter et extraire successivement les récipients au travers d'organes adaptés.

Un tel fonctionnement au travers d'unités équipées d'éléments rotatifs permet un traitement quasiment continu d'un flux d'articles circulant à des cadences très élevées. Actuellement, la cadence de production d'une telle installation est généralement de l'ordre de 50000 récipients par heure, ce qui correspond à la cadence de défilement des préformes dans le four, où la vitesse desdites préformes sur une des roues de transfert est de l'ordre de un mètre par seconde (m/s).

L'entraînement en rotation d'un élément mobile, comme le carrousel, s'effectue par l'intermédiaire d'un moteur opérant selon une boucle ouverte. Plus précisément, ce fonctionnement consiste à envoyer une consigne de vitesse vers le moteur, sous forme d'une fréquence fixe indiquant la vitesse de rotation à laquelle ledit moteur doit tourner.

Un tel fonctionnement en boucle ouverte du moteur, notamment de type asynchrone, assure une puissance et une vitesse de rotation nécessaires aux cadences de production envisagées, à savoir un défilement et un traitement de plusieurs milliers d'articles à l'heure.

Toutefois, lors de l'arrêt de tels moteurs en fonctionnement en boucle ouverte, que ledit arrêt soit commandé en diminuant progressivement la vitesse de rotation, ou bien forcé lors d'une urgence, les organes se retrouvent positionnés aléatoirement. Dès lors, il est nécessaire d'actionner manuellement la rotation de l'élément mobile, afin de le tourner et d'aligner un organe dans une position souhaitée, par exemple en vis-à-vis d'une trappe d'accès prévue au niveau d'une zone de maintenance ou pour effectuer un changement de format. Cette action manuelle s'effectue directement au niveau de l'unité de traitement, par l'intermédiaire d'une manivelle, ou de façon commandée par le biais d'une commande dite « jog » (provenant du terme consacré en langue anglaise).

De surcroît, structurellement, plusieurs éléments des machines sont asservis ensemble mécaniquement, selon un seul sens de fonctionnement de la machine. En effet, la réalisation de certaines opérations ne peut pas être effectuée en sens inverse du fonctionnement de la machine, en raison d'agencements et de coopérations prévues mécaniquement, comme par exemple l'ouverture des moules du carrousel s'effectue par un système de galets agissant sur une came, de même la chaîne transportant les corps creux au sein de l'unité de traitement thermique est configurée selon une résistance en traction dans le sens prévu d'avancement, sous l'effet des contraintes thermiques qu'elle subit, et risquant de ne pas résister si elle est tirée en sens opposé, ainsi encore que la saisie des corps creux par un mandrin qui est réalisée par un système mécanique de came et de galet (décrit ultérieurement) qui ne peut fonctionner que dans un sens unique de rotation.

Dès lors, une telle configuration permettant uniquement la rotation du moteur dans un seul sens, l'actionnement manuel reste pénible, long et fastidieux, s'il faut réaliser presque un tour complet afin d'aligner un organe au niveau de ladite trappe d'accès. En outre, en cas de dépassement de la position voulue, il est alors nécessaire d'effectuer à nouveau un tour complet, entraînant une perte de temps.

Par ailleurs, au sein d'une ligne de production, étant donné que plusieurs unités de traitements sont synchronisés entre elles, il n'est pas possible, sauf cas exceptionnel, d'aligner simultanément un organe d'une première unité rotative en face de sa trappe d'accès, ainsi que l'organe d'une autre unité en face de la sienne. Il est alors nécessaire de répéter l'opération d'actionnement manuelle pour chacune des unités de traitements, en vue de positionner leur organe correctement, induisant encore une fois une perte de temps conséquente lors de cette opération.

L'invention a pour but de pallier les inconvénients de l'état de la technique en proposant une gestion d'unité de traitement rotative d'une ligne de production, à même de contrôler l'arrêt dans une position indexée. En particulier, l'invention permet de configurer une position angulaire souhaitée lors de l'arrêt de l'élément mobile d'une unité rotative, voire de plusieurs, de sorte que leur organe respectif se retrouve exactement dans la position souhaitée.

Pour ce faire, l'invention concerne un procédé de gestion d'au moins une première unité de traitement rotative d'une ligne de production de d'articles obtenus par moulage par soufflage, ladite ligne de production comprenant usuellement une unité de conditionnement thermique appelée « four », une unité de soufflage, une unité d'étiquetage et une unité de remplissage, ladite unité de conditionnement thermique comprenant une ou plusieurs trappes d'accès, dans lequel on entraîne en rotation un premier élément mobile de ladite unité de conditionnement thermique rotative, caractérisé en ce qu'il comprend une phase d'arrêt contrôlé incluant les étapes de :
- déterminer une première position angulaire de consigne d'arrêt pour le premier élément mobile par rapport à ladite unité de conditionnement thermique rotative, et
- commander l'arrêt dudit premier élément mobile de manière à ce que ledit arrêt du premier élément mobile ait lieu dans ladite première position angulaire de consigne d'arrêt, préalablement déterminée, afin d'arrêter l'unité de conditionnement thermique rotative dans une position précise, avec un de ses organes choisis en face d'une trappe d'accès.

Avantageusement, la phase d'arrêt contrôlé du premier élément mobile comprend :
- une étape au cours de laquelle on mesure la position angulaire du premier élément mobile par rapport à ladite unité de conditionnement thermique rotative ; et
- ladite étape de commander l'arrêt dudit premier élément mobile au cours de laquelle on commande la vitesse de rotation dudit premier élément mobile pour atteindre une vitesse de rotation nulle lorsque la position angulaire mesurée coïncide avec la première position angulaire de consigne d'arrêt.

Avantageusement, on démarre ladite phase d'arrêt contrôlé lorsqu'un besoin d'arrêt simple est déterminé, c'est-à-dire un besoin d'arrêt autre qu'un besoin d'arrêt d'urgence.

Dans le texte, la première position angulaire de consigne d'arrêt est parfois appelée première position angulaire configurée.

De façon additionnelle, mais aucunement limitative, un tel procédé de gestion peut consister à configurer numériquement ladite première position angulaire, préalablement à l'arrêt.

Dans une variante, le procédé peut également comprendre une phase d'arrêt d'urgence dans laquelle on commande la vitesse de rotation du premier élément mobile par rapport à ladite unité de conditionnement thermique rotative pour atteindre une vitesse de rotation nulle du premier élément mobile, au plus vite possible pour ladite unité de conditionnement thermique rotative, sans maitriser la position angulaire atteinte lorsque la vitesse devient nulle.

Selon un mode de réalisation du procédé, on détermine une vitesse de rotation de sécurité et/ou une course angulaire de sécurité dudit premier élément mobile tels que ladite première unité de traitement rotative est apte à arrêter en toute sécurité ledit premier élément mobile lorsque la vitesse de rotation est inférieure à la vitesse de rotation de sécurité et/ou lorsqu'un écart angulaire entre une position angulaire effective du premier élément mobile et la première position angulaire de consigne d'arrêt est supérieur à la course angulaire de sécurité, et dans lequel la phase d'arrêt contrôlé comprend de diminuer la vitesse de rotation du première élément de mobile jusqu'à ladite vitesse de rotation de sécurité.

Ledit procédé de gestion peut consister à mesurer une position angulaire du premier élément mobile pendant la phase d'arrêt, à diminuer la vitesse de rotation du premier élément mobile , à comparer la mesure de la position angulaire du premier élément mobile avec la première position angulaire choisie, quand la vitesse de rotation du premier élément atteint une vitesse permettant l'arrêt du premier élément mobile et que la première position angulaire choisie va être atteinte, alors le premier élément rotatif va s'arrêter à la position angulaire choisie.

Dans une variante, la détermination de la première position angulaire de consigne d'arrêt se fait manuellement avant la mise en rotation dudit premier élément mobile ou au cours de son entraînement en rotation.

Ledit procédé de gestion peut consister à configurer manuellement ladite première position angulaire, avant la mise en rotation dudit premier élément mobile ou au cours de son entraînement en rotation.

Ledit procédé de gestion peut consister à modifier automatiquement ladite première position angulaire, au cours de l'entraînement en rotation dudit premier élément mobile. Avantageusement, le procédé de gestion peut comprendre de :
- détecter un dysfonctionnement dans un organe entrainé par le premier élément mobile, et
- modifier automatiquement ladite première position angulaire de consigne d'arrêt, en fonction du dysfonctionnement détecté.

Selon un mode de réalisation complémentaire, non limitatif, au cours d'une phase de traitement, on entraîne en rotation un deuxième élément mobile d'une unité de soufflage rotative de façon synchronisée avec l'entraînement de ladite unité de conditionnement thermique rotative, l'étape d'arrêt contrôlé comprenant de :
- déterminer une deuxième position angulaire de consigne d'arrêt pour le deuxième élément mobile par rapport à ladite unité de soufflage rotative, et
- commander la vitesse de rotation du deuxième élément mobile pour atteindre une vitesse de rotation nulle lorsque la position angulaire mesurée coïncide avec la deuxième position angulaire de consigne d'arrêt,
la rotation du deuxième élément mobile et la rotation dudit premier élément mobile étant désynchronisée l'une par rapport à l'autre durant l'étape d'arrêt contrôlé.

Dans une variante du procédé, après l'étape d'arrêt contrôlé, on commande un redémarrage de ladite unité de conditionnement thermique rotative et qu'on synchronise automatiquement le redémarrage de ladite unité de soufflage rotative en fonction desdites première et deuxième positions angulaires de consigne d'arrêt.

Avantageusement, dans l'un quelconque des modes de réalisation ou variantes évoqués, les articles sont des préformes ou des récipients obtenus à partir de préformes en matériau thermoplastique.

Avantageusement, dans l'un quelconque des modes de réalisation ou variantes évoqués, la ligne de production d'articles est une ligne de traitement de récipients comprenant au moins une machine de formage de récipients à partir de préformes en matériau thermoplastique.

Avantageusement, dans l'un quelconque des modes de réalisation ou variantes évoqués, le premier élément mobile de la première unité de traitement (respectivement le deuxième élément mobile de la deuxième unité de traitement) est équipé d'au moins un moyen individuel de préhension et/ou d'entrainement d'un article.

Avantageusement, dans l'un quelconque des modes de réalisation ou variantes évoqués, une ou plusieurs position angulaire de consigne d'arrêt sont préenregistrées, chacune correspondant à une configuration de besoins prédéterminés d'arrêt.

Avantageusement, le ou lesdits besoins d'arrêt sont pris parmi une liste comprenant : défaut identifié sur un composant du premier (respectivement du deuxième) élément mobile ; requête reçue de changement de format d'articles à produire, défaut identifié comme nécessitant l'introduction d'un opérateur dans une zone de la ligne de production.

L'invention concerne aussi un dispositif de gestion d'au moins une unité de traitement rotative d'une ligne de production d'articles obtenus par moulage par soufflage, ladite ligne de production comprenant usuellement une unité de conditionnement thermique appelée « four », une unité de soufflage, une unité d'étiquetage et une unité de remplissage, ladite unité de conditionnement thermique comprenant une ou plusieurs trappes d'accès, chaque unité de traitement rotative, à savoir l'unité de conditionnement thermique et l'unité de soufflage, comprenant au moins un premier élément mobile entraîné en rotation par des moyens de motorisation et pourvu en périphérie d'au moins un organe de traitement d'article, et chaque unité de traitement comprenant une ou plusieurs trappes d'accès, caractérisé en ce qu'il comprend des moyens de contrôle de l'arrêt dudit premier élément mobile conçus pour faire arriver le premier élément mobile a une première position angulaire de consigne d'arrêt avec une vitesse de rotation nulle afin d'arrêter une unité de traitement (100,200) rotative dans une position précise, avec un de ses organes choisis en face d'une trappe d'accès.

Dans une variante, les moyens de contrôle sont aptes à mesurer une position angulaire du premier élément mobile et un système de gestions est apte à commander les moyens de motorisation. Les moyens de contrôle et le système de gestions sont reliés entre eux pour contrôler l'arrêt dudit premier élément mobile dans ladite première position angulaire de consigne d'arrêt.

De façon additionnelle, mais non limitativement, lesdits moyens de motorisation peuvent comprendre un moteur commandé numériquement en boucle fermée par lesdits moyens de contrôle.

En outre, un tel dispositif de gestion permet la mise en œuvre du procédé de gestion selon l'invention.

Dès lors, l'invention permet d'arrêter une unité de traitement rotative dans une position précise, avec un de ses organes choisis en vis-à-vis d'un endroit précis, en face d'une trappe d'accès. En outre, il est possible de modifier au préalable la position du futur arrêt, qui est alors variable, dépendant notamment de la raison envisagée, par exemple pour une fin ou un changement de production, lors d'un échantillonnage ou bien en vue d'opérations de maintenance.

Le choix de la position d'arrêt peut être saisie manuellement par un opérateur, au moment du lancement ou en cours de production. Il peut aussi être effectué de façon automatique. En effet, de façon subsidiaire, l'invention permet d'envisager une programmation autonome par le système de gestion de l'unité de traitement, permettant en cours de fonctionnement de déterminer une position angulaire d'arrêt, notamment à partir de données enregistrées ou captées, concernant ledit fonctionnement. A titre d'exemple, si un capteur détecte un dysfonctionnement mineur au niveau d'un organe d'une unité de traitement, le système de gestion peut alors envisager une maintenance dudit organe au moment de l'arrêt déjà prévu ou bien initier automatiquement l'arrêt dans la position alignant avec la trappe d'accès, ledit organe à réparer, à remplacer ou encore qui doit subir une opération de maintenance.

L'invention prévoit d'utiliser un fonctionnement de chacun des moteurs des éléments mobiles en rotation, au travers d'une boucle fermée.

Dans le cas de plusieurs unités rotatives, il est possible de les arrêter dans des positions différentes, de façon désynchronisée, puis de les coordonner de nouveau lors de leur remise en marche, au travers d'une gestion numérique de chacun des moteurs.

En outre, il est toujours possible de commander un arrêt d'urgence sans se préoccuper de la position d'arrêt.

Selon un autre aspect, l'invention porte également sur une ligne de production d'articles comprenant une unité de traitement rotative et un dispositif de gestion précité, dans laquelle les articles sont des préformes ou des récipients obtenus à partir de préformes en matériau thermoplastique.

Avantageusement, la ligne de production d'articles comprend au moins une machine de formage de récipients à partir de préformes en matériau thermoplastique.

Avantageusement, le premier élément mobile de l'unité de traitement thermique rotative (respectivement le deuxième élément mobile de l'unité de de soufflage rotative) est équipé d'au moins un moyen individuel de préhension et/ou d'entrainement d'un article.

Avantageusement, le ligne de production d'article comprend un ou plusieurs capteur d'état ou de mesure reliés à un dispositif d'analyse apte à déterminer un ou plusieurs besoins d'arrêt, le dispositif de gestion étant relié au dispositif d'analyse et comprenant une table préenregistrée mettant en regard de chaque besoin d'arrêt préenregistré une position angulaire de consigne d'arrêt adaptée.

D'autres caractéristiques et avantages de l'invention ressortiront de la description détaillée qui va suivre des modes de réalisation non limitatifs de l'invention, en référence aux figures annexées dans lesquelles :

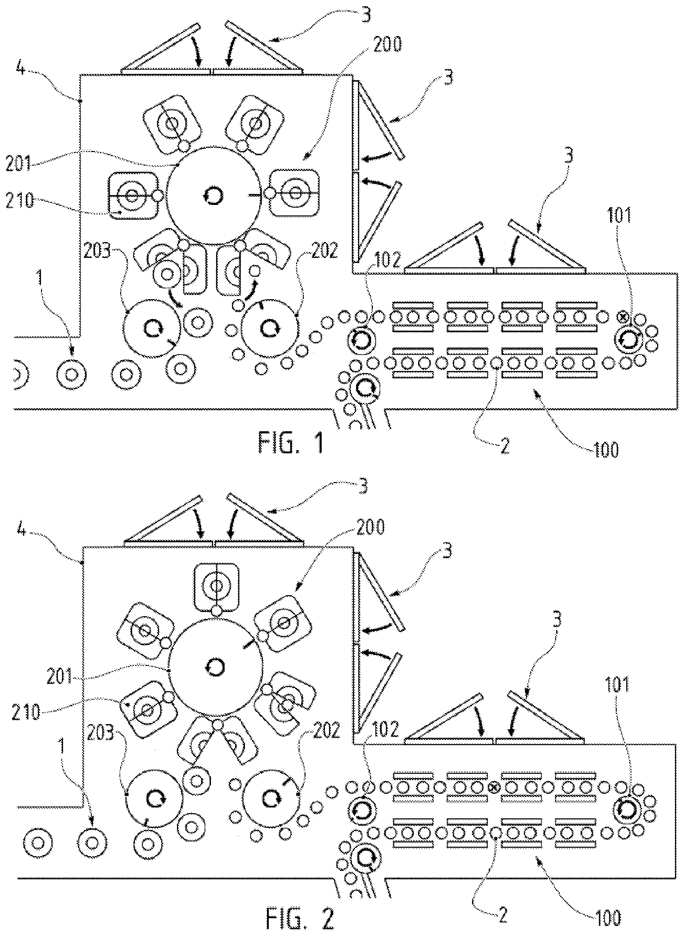

- la figure 1 représente schématiquement une vue de dessus, en coupe selon un plan horizontal, d'un exemple de réalisation montrant une partie d'une ligne de production de récipients, pourvue de plusieurs unités de traitement, dont une unité de traitement de conditionnement thermique et une unité de soufflage, comprenant chacune au moins un élément mobile, lesdits éléments mobiles des unités de traitement étant arrêtés dans une première position angulaire ; et
- la figure 2 représente une figure similaire à la figure 1, montrant lesdits éléments mobiles en rotation dont l'arrêt a été commandé selon une autre position angulaire.

La présente invention concerne la gestion d'au moins une unité de traitement au sein d'une ligne de production de récipients 1.

En référence à l'exemple non limitatif, représenté sur les figures 1 et 2, montrant une partie d'une ligne de production de récipients 1, un module de fabrication desdits récipients est pourvu d'une première unité de traitement 100 et d'une deuxième unité de traitement 200. En outre, selon un mode de réalisation non limitatif, la première unité de traitement 100 peut être un four de chauffage des préformes, tandis que la deuxième unité de traitement 200 peut être une unité de soufflage.

Dans le cadre de l'invention, chaque unité de traitement 100,200 est prévue rotative. Pour ce faire, elle comprend au moins un élément mobile entraîné en rotation par des moyens de motorisation (non représentés). Une unité de traitement rotative 100,200 peut comprendre un ou plusieurs éléments mobiles, en particulier une première unité de traitement rotative 100 peut comprendre au moins un premier élément mobile 101 et un deuxième élément mobile 102, une deuxième unité de traitement 200 peut comprendre un premier élément mobile 201, un deuxième élément mobile 202, un troisième élément mobile 203, etc.

En somme, chaque élément mobile tourne sur lui-même, selon un sens de rotation, modélisé par des flèches circulaires sur les figures 1 et 2.

Comme évoqué précédemment, on notera que cette rotation est opérée selon un seul sens de rotation, la rotation en sens inverse n'étant pas envisageable en raison d'accouplements mécaniques avec d'autres composants de l'installation.

Chaque élément mobile peut comprendre, répartis en périphérie, des organes dédiés aux différents traitements à appliquer aux produits par l'unité de traitement 100,200 en question.

Dans le cas d'une unité de traitement thermique, qui permet lors de cette étape de chauffer le corps creux a une température au-delà de sa température de transition vitreuse pour le rendre malléable, tout au long du trajet de chauffe, les corps creux sont convoyés en ligne au moyen d'une chaîne de transport comprenant une pluralité de maillons, dont chacun est pourvu d'un mandrin aussi appelé « tournette », destiné à saisir le col du corps creux. La structure d'une telle chaîne est bien décrite dans le brevet européen EP 0 935 572. Le mouvement de montée et de descente du mandrin est commandé par un mécanisme de came et de galet. Cette chaîne de transport est habituellement montée entre deux éléments mobiles 101, 102 tels que des roues, à savoir une roue motrice et une roue suiveuse.

Dans le cas d'une unité de soufflage, un tel organe peut être un moule 210, destiné à recevoir intérieurement une préforme 2. Selon l'exemple représenté sur les figures, la deuxième unité de traitement rotative 200 comporte six moules 210, solidaires d'un premier élément mobile 201 constitué par un carrousel. Lesdits moules 210 sont montés à intervalles réguliers sur le pourtour dudit carrousel.

En outre, comme visible sur les figures, chaque moule 210 est constitué d'au moins deux demi-coquilles articulées depuis une position d'ouverture vers une position de fermeture, et inversement.

Les déplacements des demi-coquilles sont commandés entre leurs positions ouverte et fermée par une rainure de came fixe par rapport à une base du carrousel, qui agit sur un bras de came qui est porté par ledit carrousel. Le bras de came est lié mécaniquement aux demi-coquilles par une chaîne cinématique de commande comportant plusieurs composants. Par exemple, le bras de came est lui-même lié à un arbre de commande qui est lié rigidement à un bras de manivelle commandant les déplacements des demi-coquilles.

Le mouvement du mandrin permettant de saisir les corps creux, ainsi que le mouvement d'ouverture et de fermeture des demi-coquilles étant commandé par des mécanismes de came et de galet, le fonctionnement du mandrin ou des demi-coquilles n'est rendu possible que dans un sens unique de rotation des éléments mobiles.

L'invention vise spécifiquement la gestion des éléments mobiles de chaque unité de traitement rotative 100,200. En particulier, l'invention permet de configurer l'arrêt dans une position choisie, d'au moins un des éléments mobiles 101, 102 d'au moins une première unité de traitement 100, de préférence pour chaque élément mobile 101,102,201,202,203 de chaque unité de traitement 100,200. La position choisie est une position angulaire, appelée aussi position angulaire de consigne d'arrêt. En d'autres termes, l'invention envisage de déterminer l'endroit où doit s'arrêter un élément mobile 101,102 d'une première unité de traitement rotative 100, de préférence les différents endroits où doivent s'arrêter les éléments mobiles 101,102,201,202,203 d'une même ou de plusieurs unités de traitement 100,200.

A ce titre, au moins une trappe d'accès 3 permet à un opérateur d'intervenir sur les équipements d'une unité de traitement 100,200, en particulier d'accéder intérieurement à ses éléments mobiles et ses organes. Dès lors, le choix de la position d'arrêt permet d'aligner un équipement et/ou un produit en vis-à-vis d'une trappe d'accès 3, en vue d'effectuer une opération, comme un contrôle, un échantillonnage, une maintenance, une réparation, etc.

Comme visible sur les figures, chaque unité de traitement 100,200 peut comprendre une ou plusieurs trappes d'accès 3, situées à différents emplacements autour de la machine. En outre, chaque trappe d'accès 3 est montée articulée sur un bâti 4 entourant la machine, passant d'une position fermée à une position ouverte, et inversement.

L'invention concerne un procédé de gestion d'au moins une première unité de traitement rotative 100 d'une ligne de production d'articles, dans lequel on entraîne en rotation un premier élément mobile 101 et deuxième élément mobile 102 de ladite première unité de traitement rotative 100.

Ultérieurement, on commande l'arrêt d'au moins un élément mobile, notamment du premier élément mobile 101 qui entraîne l'arrêt du deuxième élément mobile 102. L'invention permet de commander l'arrêt de toutes ou parties, de préférence toutes les unités de traitement 100,200.

En particulier, un système de gestion permet l'envoi d'une commande vers les moyens de motorisation de chaque élément mobile d'une des unités de traitement 100,200. Une telle commande, une fois interprétée, initie le ralentissement jusqu'à l'arrêt complet desdits moyens de motorisation.

Avantageusement, on contrôle ledit arrêt dudit premier élément mobile 101 selon une première position angulaire choisie par rapport à ladite première unité de traitement rotative 100. En somme, on détermine où doit s'arrêter un des éléments mobiles de la première unité de traitement 100, de sorte qu'au moment de l'arrêt, ledit élément mobile se retrouve exactement dans ladite position d'arrêt décidée et ainsi positionné, l'un des mandrins de la chaîne de transport en vis-à-vis de la trappe d'accès.

Si on considère la deuxième unité de traitement 200 de soufflage constituée par un carrousel, en référence à la figure 1, on détermine que la position d'arrêt aligne un des moules en vis-à-vis de la trappe d'accès 3 située à droite. En référence à la figure 2, on a déterminé l'arrêt dudit carrousel de sorte qu'un autre moule se retrouve en vis-à-vis de la trappe d'accès 3 située supérieurement.

Si on considère la première unité de traitement thermique 100, à partir de la figure 1, il est possible de choisir une préforme 2, identifiée par une croix, ou bien un mandrin, par exemple une préforme 2 à échantillonner ou pour effectuer une maintenance au niveau dudit mandrin, de sorte que, lors de l'arrêt, les premiers 101 et seconds 102 éléments mobiles s'arrêtent dans des positions calculées pour que ladite préforme 2 ou le mandrin se retrouvent en vis-à-vis de la trappe d'accès 3 de ladite première unité de traitement 100, comme visible sur la figure 2.

On notera qu'il a été modélisé sur les figures un indicateur angulaire, fixe sur chaque élément mobile, ledit indicateur servant visuellement de référence, afin de mieux appréhender la position d'arrêt envisagée au sens de la présente invention.

Dès lors, on constate que la position d'arrêt peut se retrouver à un emplacement angulaire déterminé, de sorte qu'un équipement se retrouve à un endroit identique (dans le cas du moule situé en face de la trappe d'accès à droite sur la figure 1), ou bien que l'endroit d'arrêt d'un autre équipement, se retrouve à l'emplacement désiré, par rapport à la position angulaire d'arrêt souhaitée (comme visible sur la figure 2 concernant un autre moule ou concernant la préforme 2 identifiée).

En somme, la position angulaire déterminée est définie pour qu'un élément bien spécifié se retrouve à un emplacement précis et choisi.

Plus avant, la configuration de la ou des positions angulaires d'arrêt de chaque élément mobile 101,102,201,202,203 peut être effectuée numériquement, préalablement à l'arrêt en question. Un système de gestion adapté, notamment sous forme d'un automate programmable et/ou d'un logiciel informatique, permet de déterminer et/ou de sélectionner la ou les positions lors du prochain arrêt.

Un tel système de gestion permet de configurer manuellement ladite première position angulaire, avant la mise en rotation dudit premier élément mobile 101 ou bien au cours de son entraînement en rotation. Un opérateur est alors en charge de la saisie, notamment au niveau d'un pupitre de contrôle ou par l'intermédiaire d'une interface embarquée sur un terminal portable.

De plus, l'invention consiste à modifier automatiquement ladite première position angulaire, au cours de l'entraînement en rotation dudit premier élément mobile 101. En d'autres termes, le système de gestion peut être autonome et/ou peut permettre de déterminer de lui-même une position spécifique d'arrêt. En particulier, le système peut recevoir des informations, à partir de détecteurs et de capteurs, susceptibles de déterminer la nécessité de programmer un arrêt, comme par exemple en cas d'un dysfonctionnement mineur d'un des organes, tel qu'une vanne de soufflage, un mandrin ou un moule, ce qui requiert sa maintenance ou son remplacement.

En somme, la machine programme d'elle-même, à partir de données captées ou mesurées, une position d'arrêt identique ou différente de celle initialement configurée. En particulier, le système de gestion peut prévoir un arrêt progressif, diminuant par pallier la vitesse d'entraînement des moyens de motorisation, pour permettre à un opérateur d'identifier un potentiel dysfonctionnement, issu desdites données automatiquement perçues.

Plus avant, dans le cas de la gestion de plusieurs unités de traitement 100,200, l'invention prévoit de commander l'entraînement en rotation d'un deuxième élément mobile 201 d'une deuxième unité de traitement rotative 200 de façon synchronisée avec l'entraînement de ladite première unité de traitement rotative 100.

En référence à l'exemple schématisé sur les figures, l'approvisionnement des préformes 2, au travers de l'unité de traitement thermique 100 vers l'unité de soufflage 200, s'opère de façon synchronisée, les éléments mobiles 101,102,201,202,203 tournant à des vitesses respectives en vue d'alimenter correctement, généralement en un flux régulier et continu d'articles, chacune desdits unités de traitement 100,200.

Dans ce cas, l'invention prévoit de contrôler l'arrêt dudit deuxième élément mobile 202 selon une deuxième position angulaire choisie par rapport à ladite deuxième unité 200 de traitement rotative. Autrement dit, l'invention prévoie de maîtriser de maîtriser la position angulaire où va s'arrêter effectivement le deuxième élément mobile, de manière à ce que la position effective d'arrêt coïncide avec la position angulaire de consigne d'arrêt. La réduction de vitesse allant jusqu'à l'arrêt se fait de façon désynchronisée par rapport à ladite première unité de traitement rotative 100. Il est aussi possible de contrôler l'arrêt du premier élément mobile 201 de la deuxième unité de traitement 200 selon une autre position angulaire par rapport à celui de la première unité de traitement 100.

En somme, lors de l'arrêt de chacune des unités de traitement 100,200, l'invention permet de déterminer des positions d'arrêt distinctes, qu'elles soient synchronisées entre elles, mais surtout décalées par rapport à un fonctionnement continu adapté entre ces deux unités de traitement 100,200. Il est aussi possible, si aucune liaison mécanique l'empêche, d'arrêter les éléments mobiles d'une même unité de traitement 100,200 dans des positions différentes choisies.

Une fois les éléments mobiles de chacune des unités de traitement 100,200 stoppés dans leur position respective, choisie et adaptée en fonction de l'intervention à réaliser, l'invention commande un redémarrage de ladite première unité de traitement rotative 100 et prévoit de réaliser une synchronisation automatique du redémarrage de ladite deuxième unité de traitement rotative 200, à partir desdites première et deuxième positions angulaires. En d'autres termes, au moment de commander le redémarrage des unités de traitement 100,200, l'invention effectue une coordination de chacune d'entre elle, notamment au regard de la précédente synchronisation avant arrêt.

L'invention concerne aussi un dispositif de gestion d'au moins une unité de traitement rotative 100 d'une ligne de production d'articles. De préférence, le dispositif intègre la gestion de plusieurs unités de traitement 100,200.

Chaque unité de traitement rotative 100,200 comprend donc au moins un élément mobile 101,102,201,202,203 entraîné en rotation par des moyens de motorisation.

Comme évoqué précédemment, chaque élément mobile 101,102,201,202,203 est pourvu en périphérie d'au moins un organe de traitement de produit.

Un tel dispositif de gestion comprend des moyens de contrôle de l'arrêt dudit premier élément mobile 101 selon une première position angulaire configurée.

Ledit dispositif peut assurer aussi la gestion de plusieurs éléments mobiles 101,102 d'une seule première unité de traitement 100, ainsi que la gestion de plusieurs éléments mobiles 101,102,201,202,203 de plusieurs unités de traitement 100,200. Dès lors, le dispositif de gestion permet d'arrêter de façon synchronisée selon une même position déterminée au préalable ou en cours de fonctionnement chacun ou tous les éléments mobiles 101,102,201,202,203, pour aligner un élément et/ou un produit à un endroit précis. De façon désynchronisée, le dispositif de gestion permet d'arrêter chacun des éléments mobiles 101,102,201,202,203, dans des positions déterminées et choisies, indépendantes les unes par rapport aux autres. Ce n'est qu'au moment du redémarrage des unités de traitement 100,200, que le dispositif de gestion assurera la coordination des mouvements des éléments mobiles 101,102,201,202,203, pour qu'ils se retrouvent de nouveau synchronisés entre eux.

Plus avant, lesdits moyens de motorisation peuvent comprendre un moteur commandé numériquement, notamment par des commandes transmises depuis le système de gestion, préférentiellement informatisé, selon une boucle fermée. On entend par boucle fermée le fait de mesurer une position angulaire du moyen de motorisation lors de son fonctionnement par un moyen de contrôle et être apte à commander le moyen de motorisation par le système de gestion pour qu'il s'arrête dans la position angulaire choisie. Selon un mode particulier, les moyens de motorisation comportent un moteur par élément mobiles 101,102,201,202,203 à entraîner en rotation qui est commandé par le système de gestion. Un tel moteur est équipé d'un codeur à même de connaître une position angulaire à un instant donné (à savoir l'indicateur modélisé sur les figures qui détermine un angle au cours de la rotation). Dès lors, un tel référencement du moteur rend possible d'ajuster le positionnement angulaire pour se retrouver à une position indexée déterminée à un instant ultérieur connu.

De façon subsidiaire, en cas de détection d'une anomalie grave ou d'un dysfonctionnement majeur, la gestion selon l'invention peut aussi permettre d'arrêter d'urgence les unités de traitement 100,200, sans prendre en compte les positions d'arrêt préalablement envisagées, qu'elles soient programmées, manuellement ou automatiquement, ou encore détectées en cours de fonctionnement.

Ainsi, l'invention permet d'arrêter les équipements rotatifs d'une machine dans une ou plusieurs configurations angulaires choisies, facilitant les interventions nécessaires, tout en économisant un temps précieux.

De plus, le système de gestion permet d'offrir un contrôle automatisé, avec un retour de données mesurées ou captées, afin d'adapter la position du futur arrêt en fonction des événements survenus en cours de production.

## Revendications

1. Procédé de gestion d'au moins une première unité de traitement (100) rotative d'une ligne de production d'articles obtenus par moulage par soufflage, ladite ligne de production comprenant usuellement une unité de conditionnement thermique (100) appelée « four », une unité de soufflage (200), une unité d'étiquetage et une unité de remplissage, ladite unité de conditionnement thermique (100) comprenant une ou plusieurs trappes d'accès (3), dans lequel on entraîne en rotation un premier élément mobile (101) de ladite unité de conditionnement thermique (100) rotative, **caractérisé en ce qu'**il comprend une phase d'arrêt contrôlé incluant les étapes de :
- déterminer une première position angulaire de consigne d'arrêt pour le premier élément mobile (101) par rapport à ladite unité de conditionnement thermique (100) rotative, et
- commander l'arrêt dudit premier élément mobile (101) de manière à ce que ledit arrêt du premier élément mobile (101) ait lieu dans ladite première position angulaire de consigne d'arrêt, préalablement déterminée, afin d'arrêter l'unité de conditionnement thermique (100) rotative dans une position précise, avec un de ses organes choisis en face d'une trappe d'accès (3).

2. Procédé de gestion selon la revendication précédente, **caractérisé en ce que** la phase d'arrêt contrôlé du premier élément mobile (101) comprend :
- une étape au cours de laquelle on mesure la position angulaire du premier élément mobile (101) par rapport à ladite unité de conditionnement thermique (100) rotative ; et
- ladite étape de commander l'arrêt dudit premier élément mobile (101) au cours de laquelle on commande la vitesse de rotation dudit premier élément mobile (101) pour atteindre une vitesse de rotation nulle lorsque la position angulaire mesurée coïncide avec la première position angulaire de consigne d'arrêt.

3. Procédé de gestion selon l'une quelconque des revendications précédentes, dans lequel on démarre ladite phase d'arrêt contrôlé lorsqu'un besoin d'arrêt simple est déterminé, c'est-à-dire un besoin d'arrêt autre qu'un besoin d'arrêt d'urgence.

4. Procédé de gestion selon l'une quelconque des revendications précédentes, comprenant une phase d'arrêt d'urgence dans laquelle on commande la vitesse de rotation du premier élément mobile (101) par rapport à ladite unité de conditionnement thermique (100) rotative pour atteindre une vitesse de rotation nulle du premier élément mobile, au plus vite possible pour ladite unité de traitement rotative, sans maitriser la position angulaire atteinte lorsque la vitesse devient nulle.

5. Procédé de gestion selon l'une quelconque des revendications précédentes, dans lequel on détermine une vitesse de rotation de sécurité et/ou une course angulaire de sécurité dudit premier élément mobile tels que ladite première unité de traitement rotative est apte à arrêter en toute sécurité ledit premier élément mobile lorsque la vitesse de rotation est inférieure à la vitesse de rotation de sécurité et/ou lorsqu'un écart angulaire entre une position angulaire effective du premier élément mobile et la première position angulaire de consigne d'arrêt est supérieur à la course angulaire de sécurité, et dans lequel la phase d'arrêt contrôlé comprend de diminuer la vitesse de rotation du première élément de mobile jusqu'à ladite vitesse de rotation de sécurité

6. Procédé de gestion selon l'une quelconque des revendications précédentes, **caractérisé en ce que** la détermination de la première position angulaire de consigne d'arrêt se fait manuellement avant la mise en rotation dudit premier élément mobile (101) ou au cours de son entraînement en rotation.

7. Procédé de gestion selon l'une des revendications 1 à 5, **caractérisé en ce qu'**il comprend de :
- détecter un dysfonctionnement dans un organe entrainé par le premier élément mobile (101), et
- modifier automatiquement ladite première position angulaire de consigne d'arrêt, en fonction du dysfonctionnement détecté.

8. Procédé de gestion selon l'une quelconque des revendications précédentes, dans lequel, au cours d'une phase de traitement, on entraîne en rotation un deuxième élément mobile (202) d'une unité de soufflage (200) rotative de façon synchronisée avec l'entraînement de ladite unité de conditionnement thermique (100) rotative, l'étape d'arrêt contrôlé comprenant de :
- déterminer une deuxième position angulaire de consigne d'arrêt pour le deuxième élément mobile (202) par rapport à ladite unité de soufflage (200) rotative, et
- commander la vitesse de rotation du deuxième élément mobile (202) pour atteindre une vitesse de rotation nulle lorsque la position angulaire mesurée coïncide avec la deuxième position angulaire de consigne d'arrêt, la rotation du deuxième élément mobile (202) et la rotation dudit premier élément mobile (101) étant désynchronisée l'une par rapport à l'autre durant l'étape d'arrêt contrôlé.

9. Procédé de gestion selon la revendication 8, **caractérisé en ce que**, après l'étape d'arrêt contrôlé, on commande un redémarrage de ladite unité de conditionnement thermique (100) rotative et qu'on synchronise automatiquement le redémarrage de ladite unité de soufflage (200) rotative en fonction desdites première et deuxième positions angulaires de consigne d'arrêt.

10. Procédé de gestion selon l'une quelconque des revendications précédentes, dans lequel les articles sont des préformes ou des récipients obtenus à partir de préformes en matériau thermoplastique, et/ou dans lequel la ligne de production d'articles est une ligne de traitement de récipients comprenant au moins une machine de formage de récipients à partir de préformes en matériau thermoplastique, et/ou dans lequel le premier élément mobile de la première unité de traitement (respectivement le deuxième élément mobile de la deuxième unité de traitement) est équipé d'au moins un moyen individuel de préhension et/ou d'entrainement d'un article.

11. Procédé de gestion selon l'une quelconque des revendications précédentes, dans lequel une ou plusieurs position angulaire de consigne d'arrêt sont préenregistrées, chacune correspondant à une configuration de besoins prédéterminés d'arrêt, le ou lesdits besoins d'arrêt étant avantageusement pris parmi une liste comprenant : défaut identifié sur un composant du premier (respectivement du deuxième) élément mobile ; requête reçue de changement de format d'articles à produire, défaut identifié comme nécessitant l'introduction d'un opérateur dans une zone de la ligne de production.

12. Dispositif de gestion d'au moins une unité de traitement rotative d'une ligne de production d'articles obtenus par moulage par soufflage, ladite ligne de production comprenant usuellement une unité de conditionnement thermique (100) appelée « four », une unité de soufflage (200), une unité d'étiquetage et une unité de remplissage, ladite unité de conditionnement thermique (100) comprenant une ou plusieurs trappes d'accès (3), chaque unité de traitement rotative (100,200), à savoir l'unité de conditionnement thermique (100) et l'unité de soufflage (200), comprenant au moins un premier élément mobile (101,201) entraîné en rotation par des moyens de motorisation et pourvu en périphérie d'au moins un organe de traitement d'article, et chaque unité de traitement (100,200) comprenant une ou plusieurs trappes d'accès (3), **caractérisé en ce qu'**il comprend des moyens de contrôle de l'arrêt dudit premier élément mobile (101,201) conçus pour faire arriver le premier élément mobile a une première position angulaire de consigne d'arrêt avec une vitesse de rotation nulle afin d'arrêter une unité de traitement (100,200) rotative dans une position précise, avec un de ses organes choisis en face d'une trappe d'accès (3).

## Patentansprüche

1. Verfahren zur Verwaltung zumindest einer ersten rotierenden Verarbeitungseinheit (100) einer Produktionslinie für durch Blasformen erhaltene Artikel, wobei die Produktionslinie in der Regel eine Einheit (100) zur Wärmekonditionierung, "Ofen" genannt, eine Blasformeinheit (200), eine Verschließeinheit und eine Fülleinheit umfasst, wobei die Einheit (100) zur Wärmekonditionierung eine oder mehrere Zugangsklappen (3) umfasst, bei dem ein erstes bewegliches Element (101) der ersten rotierenden Einheit (100) zur Wärmekonditionierung drehend angetrieben wird, **dadurch gekennzeichnet, dass** es eine Phase des kontrollierten Stopps umfasst, die die folgenden Schritte beinhaltet:
- Bestimmen einer ersten Stoppsollwinkellage für das erste bewegliche Element (101) in Bezug auf die erste rotierende Einheit (100) zur Wärmekonditionierung und
- Steuern des Stopps des ersten beweglichen Elements (101), so dass der Stopp des ersten beweglichen Elements (101) in der zuvor bestimmten ersten Stoppsollwinkellage erfolgt, um die rotierende Einheit (100) zur Wärmekonditionierung an einer exakten Position mit einem ihrer ausgewählten Organe gegenüber einer Zugangsklappe (3) anzuhalten.

2. Verwaltungsverfahren nach dem vorangehenden Anspruch, **dadurch gekennzeichnet, dass** die Phase des kontrollierten Stopps des ersten beweglichen Elements (101) Folgendes umfasst:
- einen Schritt, bei dem die Winkellage des ersten beweglichen Elements (101) in Bezug auf die rotierende Einheit (100) zur Wärmekonditionierung gemessen wird; und
- den Schritt des Steuerns des Stopps des ersten beweglichen Elements (101), bei dem die Drehzahl des ersten beweglichen Elements (101) so gesteuert wird, dass eine Drehzahl von Null erreicht wird, wenn die gemessene Winkellage mit der ersten Stoppsollwinkellage übereinstimmt.

3. Verwaltungsverfahren nach einem der vorangehenden Ansprüche, wobei die Phase des kontrollierten Stopps gestartet wird, wenn ein einfaches Stopperfordernis, d. h. ein anderes Stopperfordernis als ein Notstopperfordernis, ermittelt wird.

4. Verwaltungsverfahren nach einem der vorangehenden Ansprüche, umfassend eine Notstoppphase, in der die Drehzahl des ersten beweglichen Elements (101) in Bezug auf die rotierende Einheit (100) zur Wärmekonditionierung so gesteuert wird, dass für die rotierende Verarbeitungseinheit schnellstmöglich eine Drehzahl des ersten beweglichen Elements von Null erreicht wird, ohne dass die bei der Drehzahl von Null erreichte Winkellage beherrscht wird.

5. Verwaltungsverfahren nach einem der vorangehenden Ansprüche,
wobei eine Sicherheitsdrehzahl und/oder ein Sicherheitswinkelhub des ersten beweglichen Elements so bestimmt werden, dass die erste rotierende Verarbeitungseinheit in der Lage ist, das erste bewegliche Element sicher anzuhalten, wenn die Drehzahl kleiner als die Sicherheitsdrehzahl ist und/oder wenn eine Winkelabweichung zwischen einer tatsächlichen Winkellage des ersten beweglichen Elements und der ersten Stoppsollwinkellage größer als der Sicherheitswinkelhub ist, und
wobei die Phase des kontrollierten Stopps das Verringern der Drehzahl des ersten beweglichen Elements auf die Sicherheitsdrehzahl umfasst.

6. Verwaltungsverfahren nach einem der vorangehenden Ansprüche, **dadurch gekennzeichnet, dass** die Bestimmung der ersten Stoppsollwinkellage manuell erfolgt, bevor das erste bewegliche Element (101) in Drehung versetzt oder während es drehend angetrieben wird.

7. Verwaltungsverfahren nach einem der Ansprüche 1 bis 5, **dadurch gekennzeichnet, dass** es Folgendes umfasst:
- Detektieren einer Fehlfunktion eines durch das erste bewegliche Element (101) angetriebenen Organs und
- automatisches Verändern der ersten Stoppsollwinkellage in Abhängigkeit von der detektierten Fehlfunktion.

8. Verwaltungsverfahren nach einem der vorangehenden Ansprüche, wobei während einer Verarbeitungsphase ein zweites bewegliches Element (202) einer rotierenden Blasformeinheit (200) synchron mit dem Antrieb der rotierenden Einheit(100) zur Wärmekonditionierung drehend angetrieben wird, wobei der Schritt des kontrollierten Stopps Folgendes umfasst:
- Bestimmen einer zweiten Stoppsollwinkellage für das zweite bewegliche Element (202) in Bezug auf die rotierende Blasformeinheit (200) und
- Steuern der Drehzahl des zweiten beweglichen Elements (202), um eine Drehzahl von Null zu erreichen, wenn die gemessene Winkellage mit der zweiten Stoppsollwinkellage übereinstimmt,
wobei die Drehung des zweiten beweglichen Elements (202) und die Drehung des ersten beweglichen Elements (101) während des Schritts des kontrollierten Stopps nicht synchron zueinander sind.

9. Verwaltungsverfahren nach Anspruch 8, **dadurch gekennzeichnet, dass** nach dem Schritt des kontrollierten Stopps ein Neustart der rotierenden Einheit (100) zur Wärmekonditionierung gesteuert wird und dass der Neustart der rotierenden Blasformeinheit (200) in Abhängigkeit von der ersten und der zweiten Stoppsollwinkellage automatisch synchronisiert wird.

10. Verwaltungsverfahren nach einem der vorangehenden Ansprüche, wobei die Artikel Vorformlinge oder aus Vorformlingen aus thermoplastischem Material erhaltene Behälter sind und/oder wobei die Artikelproduktionslinie eine Linie zur Verarbeitung von Behältern ist, die zumindest eine Maschine zum Formen von Behältern aus Vorformlingen aus thermoplastischem Material umfasst, und/oder wobei das erste bewegliche Element der ersten Verarbeitungseinheit (bzw. das zweite bewegliche Element der zweiten Verarbeitungseinheit) mit zumindest einem individuellen Mittel zum Entnehmen und/oder Bewegen eines Artikels ausgestattet ist.

11. Verwaltungsverfahren nach einem der vorangehenden Ansprüche, wobei eine oder mehrere Stoppsollwinkellagen vorgespeichert sind, die jeweils einer Konfiguration vorbestimmter Stopperfordernisse entsprechen, wobei die Stopperfordernisse vorteilhafterweise einer Liste entnommen sind, die Folgendes umfasst: identifizierter Fehler an einer Komponente des ersten (bzw. zweiten) beweglichen Elements; empfangene Anforderung zur Änderung des Formats von zu produzierenden Artikeln, identifizierter Fehler, der den Eingriff einer Bedienperson in einem Bereich der Produktionslinie erforderlich macht.

12. Vorrichtung zur Verwaltung zumindest einer rotierenden Verarbeitungseinheit einer Produktionslinie für Artikel, die durch Blasformen erhalten werden, wobei die Produktionslinie in der Regel eine Einheit (100) zur Wärmekonditionierung, "Ofen" genannt, eine Blasformeinheit (200), eine Verschließeinheit und eine Fülleinheit umfasst, wobei die Einheit (100) zur Wärmekonditionierung eine oder mehrere Zugangsklappen (3) umfasst, wobei jede rotierende Verarbeitungseinheit (100, 200), und zwar die Einheit (100) zur Wärmekonditionierung und die Blasformeinheit (200), mindestens ein erstes bewegliches Element (101, 201) umfassen, das durch Motorisierungsmittel drehend angetrieben wird und am Umfang mit zumindest einem Artikelverarbeitungsorgan versehen ist, und wobei jede Verarbeitungseinheit (100, 200) eine oder mehrere Zugangsklappen (3) umfasst, **dadurch gekennzeichnet, dass** sie Mittel zum Steuern des Stopps des ersten beweglichen Elements (101, 201) umfasst, die dazu ausgelegt sind, das erste bewegliche Element mit einer Drehzahl von Null in eine erste Stoppsollwinkellage gelangen zu lassen, um eine rotierende Verarbeitungseinheit (100, 200) an einer exakten Position mit einem ihrer ausgewählten Organe gegenüber einer Zugangsklappe (3) anzuhalten.

## Claims

1. Method for managing at least one first rotary processing unit (100) of a production line for items obtained by blow moulding, said production line usually comprising a thermal conditioning unit (100) called "oven", a blow moulding unit (200), a labelling unit and a filling unit, said thermal conditioning unit (100) comprising one or more access hatches (3), in which method a first mobile element (101) of said first rotary thermal conditioning unit (100) is driven in rotation, **characterized in that** it comprises a controlled stopping phase including the following steps:
- determining a first setpoint angular stopping position for the first mobile element (101) relative to said rotary thermal conditioning unit (100), and
- ordering said first mobile element (101) to stop in such a way that the first mobile element (101) stops in said previously determined first setpoint angular stopping position, in order to stop the rotary thermal conditioning unit (100) in a precise position, with one of its selected members facing an access hatch (3).

2. Management method according to the preceding claim, **characterized in that** the controlled stopping phase of the first mobile element (101) comprises:
- a step during which the angular position of the first mobile element (101) relative to said rotary thermal conditioning unit (100) is measured; and
- said step of ordering the first mobile element (101) to stop, during which the rotational speed of said first mobile element (101) is controlled so as to reach a rotational speed of zero when the measured angular position coincides with the first setpoint angular stopping position.

3. Management method according to either one of the preceding claims, in which said controlled stopping phase is initiated when a simple stopping requirement is identified, that is to say a stopping requirement other than an emergency stopping requirement.

4. Management method according to any one of the preceding claims, comprising an emergency stopping phase in which the rotational speed of the first mobile element (101) relative to said rotary thermal conditioning unit (100) is controlled so that the first mobile element reaches a rotational speed of zero as quickly as possible for said rotary processing unit, with no control over the angular position reached when the speed reaches zero.

5. Management method according to any one of the preceding claims, in which a safety rotational speed and/or a safety angular travel of said first mobile element is/are determined such that said first rotary processing unit is able to stop said first mobile element entirely safely when the rotational speed is below the safety rotational speed and/or when an angular separation between an effective angular position of the first mobile element and the first setpoint angular stopping position is greater than the safety angular travel, and
in which the controlled stopping phase involves reducing the rotational speed of the first mobile element down to said safety rotational speed.

6. Management method according to any one of the preceding claims, **characterized in that** the first setpoint angular stopping position is determined manually prior to the first mobile element (101) being set in rotation, or while it is driven in rotation.

7. Management method according to one of Claims 1 to 5, **characterized in that** it involves:
- detecting a malfunction in a member driven by the first mobile element (101), and
- automatically modifying said first setpoint angular stopping position, depending on the detected malfunction.

8. Management method according to any one of the preceding claims, wherein, during a processing phase, a second mobile element (202) of a rotary blow moulding unit (200) is driven in rotation in synchrony with the driving of said rotary thermal conditioning unit (100), the controlled stopping step involving:
- determining a second setpoint angular stopping position for the second mobile element (202) relative to said rotary blow moulding unit (200), and
- controlling the rotational speed of the second mobile element (202) so as to reach a rotational speed of zero when the measured angular position coincides with the second setpoint angular stopping position,
the rotation of the second mobile element (102) and the rotation of said first mobile element (101) not being synchronised with one another during the controlled stopping step.

9. Management method according to Claim 8, **characterized in that**, after the controlled stopping step, said rotary thermal conditioning unit (100) is ordered to restart, and the restarting of said rotary blow moulding unit (200) is automatically synchronised as a function of said first and second setpoint angular stopping positions.

10. Management method according to any one of the preceding claims, in which the items are preforms or containers obtained from preforms made of thermoplastic material, and/or in which the production line for items is a container processing line comprising at least one machine for forming containers from preforms made of thermoplastic material, and/or in which the first mobile element of the first processing unit (or respectively the second mobile element of the second processing unit) is equipped with at least one individual means for gripping and/or moving an item.

11. Management method according to any one of the preceding claims, in which one or more setpoint angular stopping positions are pre-recorded, each one corresponding to a configuration of predetermined stopping requirements, the or said stopping requirements being advantageously selected from a list including: defect identified on a component of the first (or respectively second) mobile element; request received for changing the format of items to be produced; defect identified as requiring an operator to enter an area of the production line.

12. Device for managing at least one rotary processing unit of a production line for items obtained by blow moulding, said production line usually comprising a thermal conditioning unit (100) called "oven", a blow moulding unit (200), a labelling unit and a filling unit, said thermal conditioning unit (100) comprising one or more access hatches (3), each rotary processing unit (100, 200), namely the thermal conditioning unit (100) and the blow moulding unit (200), comprising at least one first mobile element (101, 201) driven in rotation by drive means and provided peripherally with at least one item processing member, and each processing unit (100, 200) comprising one or more access hatches (3), **characterized in that** it comprises means for controlling the stopping of said first mobile element (101, 201), these means being designed to make the first mobile element arrive at a first setpoint angular stopping position with a rotational speed of zero in order to stop a rotary processing unit (100, 200) in a precise position, with one of its selected members facing an access hatch (3).
